# EUROPEAN PATENT APPLICATION

(11) **EP 4 300 789 A1**
(43) Date of publication of application: **03.01.2024**
(21) Application number: 23172685.2
(22) Date of filing: 10.05.2023
(51) Int. Cl.: H02K 5/22, H02K 11/33, H02K 7/14

(54) **ELECTRIC MACHINE**

(30) Priority: 30.06.2022 IN 202241037749
(71) Applicant: Valeo Japan Co., Ltd, Kumagaya-shi, Saitama 360-0193 (JP)
(72) Inventor: BELLET, Augustin, 78322 Le Mesnil-Saint-Denis Cedex (FR); VARILLON, Mathieu, 108 00 Prague (CZ); IGHE, Mahesh, 600130 Chennai (IN); RAJA, Baskaran, 600130 Chennai (IN); PALANCHON, Laurent, 78322 Le Mesnil-Saint-Denis Cedex (FR)
(74) Representative: Valeo Systèmes Thermiques

(57) **Abstract**

The present invention discloses an electric machine (100). The electric machine (100) comprises an electric motor (106) enclosed in a motor housing (104) and an inverter module (114) enclosed in an inverter housing (112) for supplying power to the electric motor (106) from an external power source. The inverter module (114) comprises a printed circuit board (120) having a planar surface (122). The electric machine (100) further comprises a connector (124) mounted over the inverter housing (112) for introducing power from the external power source there through. The connector (124) comprises at least one connector terminal (128, 130). The electric machine (100) further comprises a conductive plate (132, 134), which electrically connects the connector terminal (128, 130) to the inverter module (114).

## Description

### TECHNICAL FIELD

The present invention relates to an electric machine. In particular, the invention relates to an arrangement for connecting an inverter module of an electric compressor with a connector.

### BACKGROUND

Generally, an electric machine, particularly an electric compressor, is provided in AC loop of a vehicle. The electric compressor includes a compressor for compressing refrigerant, an electric motor that drives the compressor, and an inverter module that drives the electric motor in a controlled manner. The inverter converts direct-current power from an external power supply into three-phase alternating-current power. The three-phase alternating-current power is supplied to the electric motor to drive the compressor. The inverter is connected to the power and communication lines from an external power supply and a control device, respectively, through a connector. The inverter includes a printed circuit board (PCB) mounted within an inverter housing and multiple electrical conductors to connect with the connector. The conductors, for example, may include lead wires.

The lead wires extending from the connector includes connector terminals to connect with respective electrical contacts on the printed circuit board. The connector terminals are typically placed on the printed circuit board and fastened to the printed circuit board using a threaded bolt. The connector terminals and the lead wire connected thereto tends to angularly move with the threaded bolt when torque is applied on the threaded bolt during fastening of the threaded bolt. Thus, the attempts to tighten the connector terminals is difficult, especially if space constraints require a onehanded operation. Even after assembly, the lead wire and connector terminals may misalign and interfere with other elements on the printed circuit board on subjection of external forces or during operation of the compressor. In addition, radius of the lead wire or bending radius of the wire are too large to fit on a front side of the printed circuit board along with other electrical components.

Accordingly, there remains a need for an arrangement to connect the inverter module with the connector that prevents misalignment and interference with other conductive elements on the printed circuit board during assembly and operation of the electric machine. Further, there is a need for an arrangement that requires less number of parts and steps for connecting the inverter module with the connector. Further, there is a need for an arrangement that efficiently utilizes the available space on the printed circuit board.

### SUMMARY

In the present description, some elements or parameters may be indexed, such as a first element and a second element. In this case, unless stated otherwise, this indexation is only meant to differentiate and name elements, which are similar but not identical. No idea of priority should be inferred from such indexation, as these terms may be switched without betraying the invention. Additionally, this indexation does not imply any order in mounting or use of the elements of the invention.

In view of forgoing, the present invention discloses an electric machine. The electric machine comprises an electric motor enclosed in a motor housing and an inverter module enclosed in an inverter housing for supplying power to the electric motor from an external power source. The inverter module comprises a printed circuit board having a planar surface. The electric machine further comprises a connector mounted over the inverter housing for introducing power from the external power source there through. The connector comprises at least one connector terminal. The electric machine further comprises a conductive plate, which electrically connects the connector terminal to the inverter module.

The connector terminal comprises a plate portion that passes through the inverter housing and extends orthogonal to the planar surface of the printed circuit board. The plate portion comprises a first side and a second side opposite to the first side. The conductive plate comprises a first portion fixed to the printed circuit board, a second portion fixed to the respective connector terminal and an intermediate portion integrally connecting the first portion and the second portion. In one embodiment, the first portion of the conductive plate is fixed to the printed circuit board via a fastening means including a screw.

The first portion of the conductive plate comprises a hole and the printed circuit board comprises an aperture. The first portion of the conductive plate is fixed on the printed circuit board in such a way the hole aligns with the aperture to pass the screw there through. The fastening means further includes an insert having a threaded bore. The insert is fixed to the printed circuit board such that the threaded bore align with the aperture of the printed circuit board to receive the screw therein.

Further, the second portion of the conductive plate is adapted to be in contact with the first side of the plate portion of the connector terminal. A torque to tighten the screw acts on the conductive plate and rotates the conductive plate around the screw threaded hole so that the second portion of the conductive plate is pushed toward the first side on the plate portion. In one embodiment, the first portion is fixed to overlie on the printed circuit board, the second portion is fixed to overlie on at least one side of the plate portion of the connector terminal, and the intermediate portion has at least one curved segment to integrally connect the first portion and the second portion of the conductive plate. In one embodiment, the conductive plate is a lead frame.

### BRIEF DESCRIPTION OF THE DRAWINGS

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 exemplarily illustrates a vertical sectional view explaining a schematic configuration of an electric machine integrated with an inverter module, according to an embodiment of the present invention;
FIG. 2 exemplarily illustrates a perspective view of the inverter housing enclosing an inverter module of FIG. 1;
FIG. 3 exemplarily illustrates a perspective view of the inverter module of FIG. 1 without a rear cover;
FIG. 4 is a schematic view of the connector connected to the inverter module of FIG. 3;
FIG. 5 exemplarily illustrates an exploded view of the connector electrically connected to the inverter module of FIG. 4;
FIG. 6 is a cross section of a first and second conductive plates connected to the inverter module of FIG. 3 along the line A-A'; and
FIG. 7 exemplarily illustrates a top perspective view of the connector connected to the inverter module of FIG. 3.

### DETAILED DESCRIPTION OF PREFERRED EMBODIMENTS

It must be noted that the figures disclose the invention in a detailed enough way to be implemented, said figures helping to better define the invention if needs be. The invention should however not be limited to the embodiment disclosed in the description.

The present invention relates to an electric machine, particularly to an electric compressor, provided in an air conditioning loop of a vehicle. The electric machine comprises an electric motor enclosed in a motor housing and an inverter module enclosed in an inverter housing. The inverter module is configured to supply power to the electric motor from an external power source. The inverter module comprises a printed circuit board having a planar surface.

The electric machine further comprises a connector to electrically connect the inverter module to the external power source. The connector is mounted over the inverter housing and comprises at least one connector terminal. The connector terminal passes through the inverter housing and extends orthogonal to the planar surface of the printed circuit board. A conductive plate electrically connects the connector terminal to the inverter module. The usage of conductive plate instead of cables prevents misalignment and interference with other conductive elements on the printed circuit board during assembly and operation of the electric machine. Further, the usage of conductive plates that are rigid in structure provides a possibility to use automated assembly line for assembly of the conductive plate. The conductive plate includes a first portion, a second portion and an intermediate portion integrally extending between the first portion and the second portion. The first portion of the conductive plate is fastened to the printed circuit board by a fastening means including a screw and an insert having a threaded bore to receive the screw therein. The second portion of the conductive plate is joined to the connector terminal by brazing or welding. Thus, the conductive plate requires only fewer parts and less steps for assembly.

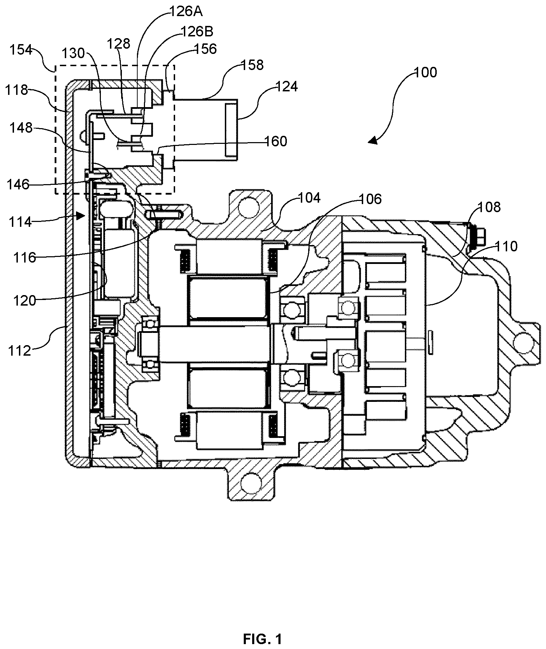

Referring to FIG. 1, the present invention discloses an electric machine (100). In the present embodiment, the electric machine (100) is an electric compressor. The electric machine (100) includes a housing constituting an outer shell thereof. The housing is composed of a motor housing (104) accommodating an electric motor (106), a compressor housing (108) accommodating a compression mechanism (110) and an inverter housing (112) accommodating an inverter module (114). The inverter housing (112), the compressor housing (108) and the motor housing (104) are coaxially connected by means of through bolts. Further, the motor housing (104), the compressor housing (108) and the inverter housing (112) are formed of metal, particularly of aluminium die-casting.

The compression mechanism (110) and the electric motor (106) are integrally linked through a motor shaft, and the compression mechanism (110) is driven by rotation of the electric motor (106) controlled by the inverter module (114). The compression mechanism (110) and the electric motor (106) cooperatively constitutes a motor-driven compressor. The arrangement and operation of the motor driven compressor are well known and accordingly will not be explained hereinafter. The inverter housing (112) is mounted on the opening end of the motor housing (104). The inverter module (114) converts high-voltage direct-current power fed from the external power source mounted on the vehicle into three-phase alternating-current power of required frequency to apply the three-phase alternating current power to the electric motor (106).

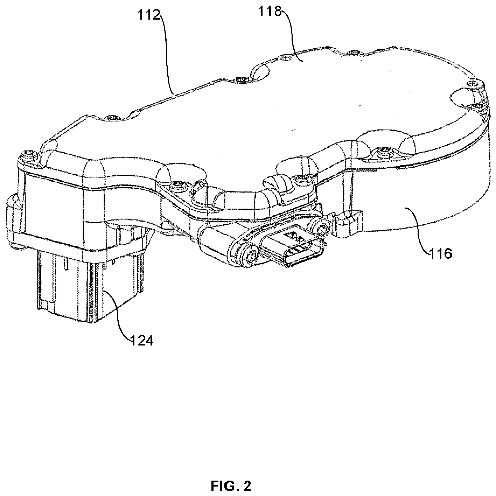

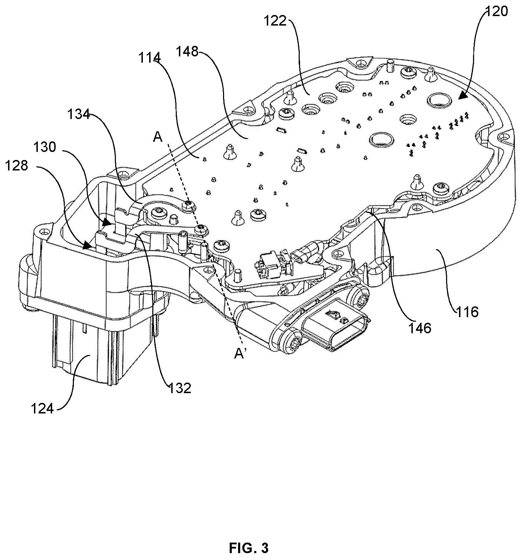

Referring to FIG. 1 and FIG. 2, the inverter module (114) provided within the inverter housing (112) composed of a front cover (116) and a rear cover (118). The inverter housing (112) is coupled to the motor housing (104) such that the front cover (116) of the inverter housing (112) is attached to the motor housing (104). The inverter housing (112) comprises an extending portion (154) which extends outward in the axial direction. An opening (160) is provided through the wall of the extending portion (154) of the front cover (116). The inverter module (114) comprises a plurality of electrical components such as a power module, a smoothing capacitor, a noise filter and so forth, which are not shown. The inverter module (114) further comprises a printed circuit board (120) having a planar surface (122) (shown in FIG. 3). The electrical components are arranged on the printed circuit board (120) and the front cover (116).

Referring to FIG. 1 and FIG. 3, the printed circuit board (120) disposed within the inverter housing (112) includes a front side (146) and a rear side (148). The front side (146) of the printed circuit board (120) faces the front cover (116) of the inverter housing (112) and the rear side (148) of the printed circuit board (120) faces the rear cover (118) of the inverter housing (112). The electrical components are arranged on the front side (146) of the printed circuit board (120). Further, a plastic frame is fixed on the front side (146) of the printed circuit board (120) such that the plastic frame holds the electrical components. A number of conductive pads are integrated with the printed circuit board (120) for configuring electrical connection with a connector (124).

The connector (124) is configured to electrically connect the inverter module (114) to the external power source. The external power source is a power line that supplies direct current power from a power supply unit (not shown) installed in the vehicle. The connector (124) comprises a connector housing and connector terminals (128, 130) housed in the connector housing. The connector housing is made of non-conductive material such as resin, and has a female coupler portion (158), a flange (156), and terminal support portions (126A, 126B). The female coupler portion (158) is configured to couple to an external male coupler (not shown). The flange portion (156) is configured to be larger than the opening (160). The terminal support portions (126A, 126B) extend from the flange portion (156) in the opposite direction of the female coupler portion (158) to support the connector terminals (128, 130) (will be explained later). The connector (124) is mounted on the extending portion (154) of the front cover (116) of the inverter housing (112) such that the flange portion (156) abuts on an exterior surface of the extending portion (154) and the terminal support portions (126A, 126B) pass through the opening (160).

The connector terminals (128, 130) including a first connector terminal (128) and a second connector terminal (130). The first connector terminal (128) and the second connector terminal (130) are power line connectors that are electrically connected to the inverter module (114).. The connector terminals (128, 130) are housed in the terminal support portions (126A, 126B), respectively.

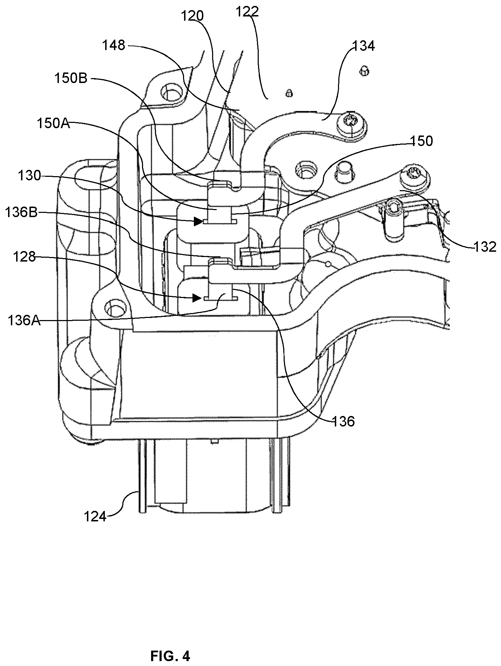

Referring to FIG. 4, the electric machine (100) further comprises at least two conductive plates (132, 134), which electrically connects the connector terminals (128, 130) to the printed circuit board (120) of the inverter module (114). The two conductive plates (132, 134) include a first conductive plate (132) and a second conductive plate (134). In one embodiment, each of the conductive plates (132, 134) are connected to respective conductive pads integrated on the printed circuit board (120). In one embodiment, the conductive plates (132, 134) are mounted at a peripheral portion of the rear side (148) of the printed circuit board (120). The arrangement of the conductive plates (132, 134) at the rear side (148) of the printed circuit board (120) does not impose spatial limitation and provides enough space for arrangement of other electrical components at the front side (146) of the printed circuit board (120).

Referring to FIG. 4 and FIG. 1, the first connector terminal (128) comprises a first plate portion (136) that passes through the front cover (116) of the inverter housing (112) and extends orthogonal to the printed circuit board (120). The first plate portion (136) comprises a first side (136A) and a second side (136B). The second connector terminal (130) comprises a second plate portion (150), which passes through the front cover (116) of the inverter housing (112) and extends orthogonal to the printed circuit board (120). The second plate portion (150) comprises a first side (150A) and a second side (150B).

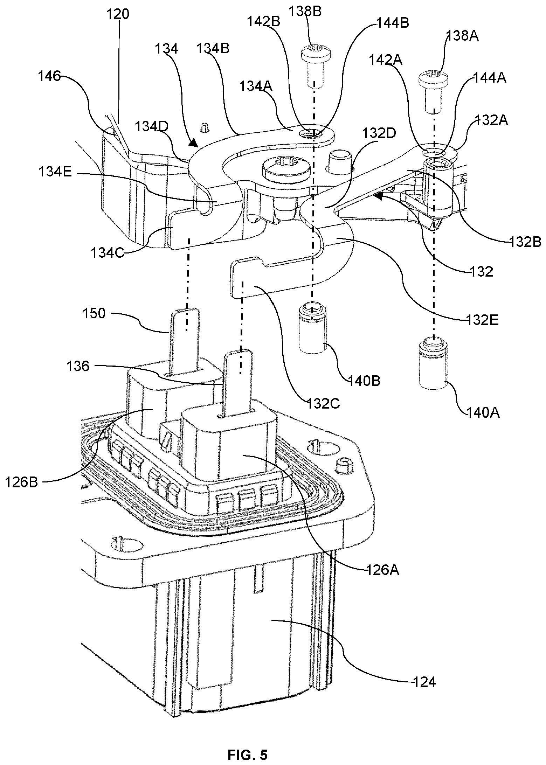

Referring to FIG. 5, the first conductive plate (132) comprises a first portion (132A), a second portion (132C) and an intermediate portion (132B) integrally extending between the first portion (132A) and the second portion (132C). The first portion (132A) of the first conductive plate (132) is fixed to overlie on the printed circuit board (120) and the second portion (132C) of the first conductive plate (132) fixed to overlie on the first side (136A) of the first plate portion (136). In one embodiment, the intermediate portion (132B) includes at least one curved segment (132D, 132E) to connect the first portion (132A) and the second portion (132C) of the first conductive plate (132). In another embodiment, the intermediate portion (132B) includes at least two curved segment (132D, 132E) to connect the first portion (132A) and the second portion (132C) of the first conductive plate (132).

The first portion (132A) of the first conductive plate (132) is electrically connected to the printed circuit board (120) and the second portion (132C) of the first conductive plate (132) is electrically connected to the first connector terminal (128). In one embodiment, the electrical connection between the first portion (132A) of the first conductive plate (132) and the printed circuit board (120) is accomplished via a first fastening means. In one embodiment, the electrical connection between the second portion (132C) of the first conductive plate (132) and the first connector terminal (128) is accomplished by brazing or welding. In one embodiment, the second portion (132C) of the first conductive plate (132) is brazed to the first side (136A) of the first plate portion (136) of the first connector terminal (128).

Still referring to FIG. 5, the second conductive plate (134) comprises a first portion (134A), a second portion (134C) and an intermediate portion (134B) integrally extending between the first portion (134A) and the second portion (134C). The first portion (134A) of the second conductive plate (134) is fixed to overlie on the printed circuit board (120) and the second portion (134C) of the second conductive plate (134) is fixed to overlie on the first side (150A) of the second plate portion (150). In one embodiment, the intermediate portion (134B) includes at least one curved segment (134D, 134E) to connect the first portion (134A) and the second portion (134C) of the second conductive plate (134). In another embodiment, the intermediate portion (134B) includes at least two curved segment (134D, 134E) to connect the first portion (134A) and the second portion (134C) of the second conductive plate (134).

The first portion (134A) of the second conductive plate (134) is electrically connected to the print circuit board (120) and the second portion (134C) of the second conductive plate (134) is electrically connected to the second connector terminal (130). In one embodiment, the electrical connection between the first portion (134A) of the second conductive plate (134) and the printed circuit board (120) is accomplished by a first fastening means. In one embodiment, the electrical connection between the second portion (134C) of the second conductive plate (134) and the second connector terminal (130) is accomplished by brazing or welding. In one embodiment, the second portion (134C) of the second conductive plate (134) is brazed to the first side (150A) of the second plate portion (150) of the second connector terminal (130).

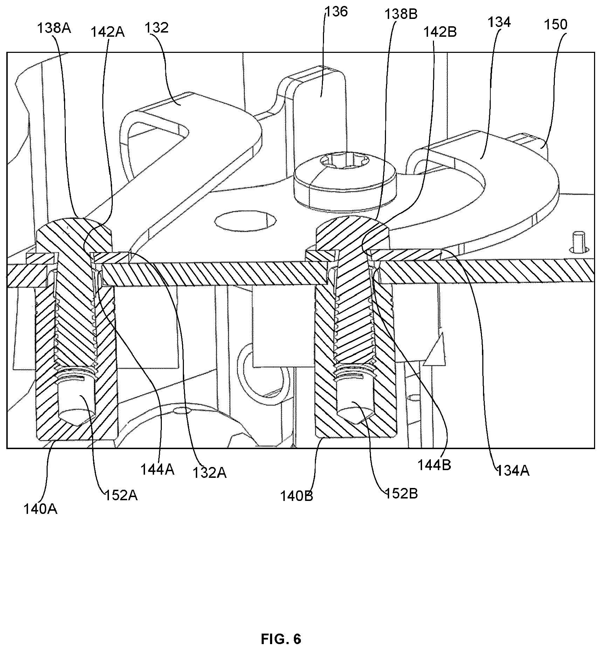

Referring to FIG. 5 and FIG. 6, the printed circuit board (120) includes a first aperture (144A) and a second aperture (144B). Further, the first fastening means includes a first screw (138A) and a first insert (140A) having a first threaded bore (152A). The first insert (140A) is fixed to the front side (146) of the printed circuit board (120) in such a way the first threaded bore (152A) aligns with the first aperture (144A). Further, the first portion (132A) of the first conductive plate (132) is fixed to the rear side (148) of the printed circuit board (120). The first portion (132A) of the first conductive plate (132) further comprises a first hole (142A). The first portion (132A) of the first conductive plate (132) is positioned in such way the first hole (142A) aligns with the first aperture (144A) of the printed circuit board (120). The first screw (138A) is passed through the first hole (142A) of the first conductive plate (132) and into the first aperture (144A) on the printed circuit board (120), and screwed into the threaded bore (152A).

Referring to FIG. 5 and FIG. 6, the second fastening means includes a second screw (138B) and a second insert (140B) having a second threaded bore (152B). The second insert (140B) is fixed to the front side (146) of the printed circuit board (120) in such a way that the second threaded bore (152B) aligns with the second aperture (144B). Further, the first portion (134A) of the second conductive plate (134) is fixed to the rear side (148) of the printed circuit board (120). The first portion (134A) of the second conductive plate (134) further comprises a second hole (142B). The second portion (134C) of the second conductive plate (134) is positioned on the printed circuit board (120) in such way the second hole (142B) aligns with the second aperture (144B). The second screw (138B) is passed through the second hole (142B) of the second conductive plate (134) and into the second aperture (144B) on the printed circuit board (120), and screwed into the second threaded bore (152B). Thus, fastening of the conductive plates (132, 134) using brazing, or welding, and screws requires only fewer parts and less steps for assembly. Further, the usage of the conductive plates (132, 134) that are rigid in structure provides a possibility to use automated assembly line for assembly of the conductive plate (132, 134).

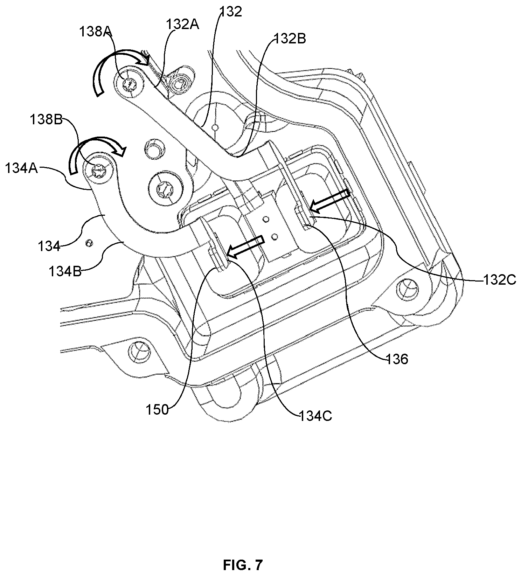

Referring to FIG. 7, during assembly, the first hole (142A) on the first portion (132A) of the first conductive plate (132) is positioned to align with the first aperture (144A) on the printed circuit board (120) and the second portion (134C) of the second conductive plate (134) is positioned to contact the first side (136A) of the first plate portion (136). The first screw (138A) is passed through the first hole (142A) and into the first aperture (144A) to receive the first screw (138A) within the first threaded bore (152A) of the first insert (140A). A torque is applied over the first screw (138A) to fasten the first screw (138A) into the first threaded bore (152A).

The torque applied to tighten the first screw (138A) could transfer torsional moment to the first conductive plate (132) and rotate the conductive plate (132) around the first aperture (144A). The conductive plate (132) rotates around the first aperture (144A) till the second portion (132C) of the conductive plate (132) abuts on the first side (136A) of the first plate portion (136). Then the second portion (132C) of the conductive plate (132) and the first plate portion (136) are sandwiched by electrodes (not shown) of a welding machine and welded.

In another example, the second portion (132C) of the conductive plate (132) and the first plate portion (136) may be joined by brazing operation. A brazing layer, for example, a preform material, may be formed on a side of the second portion (132C) of the conductive plate (132) contacting the first plate portion (136). Then, the second portion (132C) of the conductive plate (132) and the first plate portion (136) are sandwiched by electrodes (not shown) of a brazing machine and brazed. This configuration is useful to stop the rotation of the conductive plate (132) by the first plate portion (136) and make the two plates (132, 136) in abutting contact before welding or brazing them.

The second hole (142B) on the first portion (134A) of the second conductive plate (134) is positioned to align with the second aperture (144B) on the printed circuit board (120) and the second portion (134C) of the second conductive plate (134) is positioned to contact the first side (150A) of the second plate portion (150). A torque is applied to tighten the second screw (138A) could transfer the torsional moment to the second conductive plate (134) and rotate the second conductive plate (134) around the second aperture (144B). The conductive plate (134) rotates around the second aperture (144B) till the second portion (134C) of the conductive plate (134) abuts on the first side (150A) of the second plate portion (150).

Then the second portion (134C) of the conductive plate (134) and the second plate portion (150) are sandwiched by electrodes (not shown) of a welding machine and welded. In another example, the second portion (134C) of the conductive plate (134) and the second plate portion (150) may be joined by brazing operation. A brazing layer, for example, a preform material, may be formed on a side of the second portion (134C) of the conductive plate (134) contacting the second plate portion (150). Then, the second portion (134C) of the conductive plate (134) and the second plate portion (150) are sandwiched by electrodes (not shown) of a brazing machine and brazed. This configuration is useful to stop the rotation of the conductive plate (134) by the second plate portion (150) and make the two plate (134, 150) in abutting contact before brazing or welding them.

In any case, the invention cannot and should not be limited to the embodiments specifically described in this document, as other embodiments might exist. The invention shall spread to any equivalent means and any technically operating combination of means.

## Claims

1. An electric machine (100), comprising:
an electric motor (106) enclosed in a motor housing (104);
an inverter module (114) enclosed in an inverter housing (112) for supplying power to the electric motor (106) from an external power source, the inverter module (114) comprising a printed circuit board (120) having a planar surface (122), and
a connector (124) mounted over the inverter housing (112) for introducing power from the external power source therethrough, the connector (124) comprising at least one connector terminal (128, 130), **characterized in that**,
a conductive plate (132, 134) electrically connects the connector terminal (128, 130) to the inverter module (114).

2. The electric machine (100) of claim 1, wherein the connector terminal (128, 130) comprises a plate portion (136, 150) that passes through the inverter housing (112) and extends orthogonal to the planar surface (122) of the printed circuit board (120), and the plate portion (136, 150) having a first side (136A, 150A) and a second side (136B, 150B) opposite to the first side (136A, 150A).

3. The electric machine (100) of claim 2, wherein the conductive plate (132, 134) comprises a first portion (132A, 134A) fixed to the printed circuit board (120), a second portion (132C, 134C) fixed to the respective connector terminal (128, 130), and an intermediate portion (132B, 134B) integrally connecting the first portion (132A, 134A) and the second portion (132C, 134C).

4. The electric machine (100) of claim 3, wherein the first portion (132A, 134A) of the conductive plate (132, 134) is fixed to the printed circuit board (120) via a fastening means including a screw (138A, 138B).

5. The electric machine (100) of claim 4, wherein the first portion (132A, 134A) of the conductive plate (132, 134) comprises a hole (142A, 142B) and the printed circuit board (120) comprises an aperture (144A,144B) to pass the screw (138A, 138B) therethrough.

6. The electric machine (100) of claim 4 and 5, wherein the fastening means include an insert (140A, 140B) having a threaded bore (152A, 152B), the insert (140A, 140B) is fixed to the printed circuit board (120) such that the threaded bore (152A, 152B) aligns with the aperture (144A, 144B) of the printed circuit (120) to receive the screw (138A, 138B) therein.

7. The electric machine (100) of claim 3, wherein the second portion (132C, 134C) of the conductive plate (132, 134) is adapted to contact with the first side (136A, 150A) of the plate portion (136, 150) of the connector terminal (128, 130).

8. The electric machine (100) of claim 4 to 7,wherein a torque to tighten the screw (138A, 138B) acts on the conductive plate (132, 134) to rotate the conductive plate (132, 134) around the aperture (144A,144B) so that the second portion (132C, 134C) of the conductive plate (132, 134) is abuts against the first side (136A, 150A) on the plate portion (136, 150).

9. The electric machine (100) of claim 3, wherein the first portion (132A, 134A) fixed to overlie on the printed circuit board (120), the second portion (132C, 134C) fixed to overlie on at least one side (136A, 136B, 150A, 150B) of the plate portion (136, 150) of the connector terminal (128, 130), and the intermediate portion (132B, 134B) has at least one curved segment (132C, 132D, 134C, 134D) to integrally connect the first portion (132A, 134A) and the second portion (132C, 134C) of the conductive plate (132, 134).

10. The electric machine (100) of claim 1, wherein the conductive plate (132, 134) is a lead frame.
